# EUROPEAN PATENT SPECIFICATION

(11) **EP 2 483 163 B1**
(45) Date of publication and mention of the grant of the patent: **09.09.2015**
(21) Application number: 10776159.5
(22) Date of filing: 29.09.2010
(51) Int. Cl.: B65B 29/02, B65B 9/06

(54) **METHOD AND MACHINE FOR PACKING INFUSION PRODUCTS INTO CAPSULES**
VERFAHREN UND MASCHINE ZUM VERPACKEN VON INFUSIONSPRODUKTEN IN KAPSELN
PROCÉDÉ ET MACHINE D'EMBALLAGE DE PRODUITS A INFUSER DANS DES CAPSULES

(30) Priority: 02.10.2009 IT BO20090638
(43) Date of publication of application: 08.08.2012
(73) Proprietor: I.M.A. Industria Macchine Automatiche S.p.A., 40064 Ozzano dell'Emilia - Bologna (IT)
(72) Inventor: CONTI, Roberto, 40026 Imola (IT)
(74) Representative: Lanzoni, Luciano
(86) International application number: PCT/IB2010/054389
(87) International publication number: WO 2011/039711

(56) References cited:
- EP-A1- 0 468 079
- EP-A1- 1 929 904
- EP-A1- 2 100 824
- WO-A1-03/051715
- US-A1- 2004 094 229

## Description

### Technical Field

This invention relates to a method and a machine for packing infusion products, such as coffee, for example, into capsules of hard plastic material.

The capsules which this specification refers to in particular have a zone for receiving a product charge enclosed between a first closed end and a second open end which is designed to be sealed by a length of film (heat)sealed to the outside area (usually circular) of the capsule.

Each individual capsule may also be enclosed in an individual flexible overwrap or flow pack closed by heat sealing.

### Background Art

Packaging machines of this type currently available on the market have a succession of stations, usually integrated in a sealed compartment with controlled atmosphere.

The main stations of these machines are basically arranged as follows along a line of machine extension:
- a first station comprising a first roll for continuously feeding first (heat)sealable sealing film for sealing the second end of each capsule and a second roll for feeding a second overwrapping film used to make the overwrap;
- a second station for feeding capsules to be placed on conveyor members or carrier blocks featuring seats for receiving the capsules positioned with the second end facing upward and moved stepwise along the line of machine extension;
- a third station for filling the advancing capsules with charges of the infusion product;
- a fourth station for sealing the second ends of the capsules with respective pieces of the first film;
- a fifth station for picking up the capsules from the carrier blocks and placing them on a continuous web of the second, overwrapping film;
- a sixth station for sealing individual portions of overwrapping film each enclosing a capsule;
- a seventh station for picking up the packs made and feeding the packs into an eighth and final station for packaging them into boxes containing a plurality of the products.

At present, methods for filling a product charge into a capsule and sealing the capsule with sealing film comprise performing the following steps at the above mentioned stations:
- feeding empty capsules in succession along a feed line;
- filling the capsules with a charge of infusion product;
- sealing the capsules with a web of sealing film using joining means operating at least on the outer circular zone of each capsule;
- separating the capsule with the sealing film portion from the waste portion of the sealing film.

These prior art methods have drawbacks which lead not only to poor end product quality but also to machine malfunctioning. In effect, the cutting means used for performing the separating step operate along the outer circumference of the capsule, in particular according to a vertical direction from the bottom up in such a way as to separate the capsule from the advancing web of sealing film.

To avoid damaging the capsule, however, these cutting means must necessarily make a cut that is larger in diameter than the second end of the capsule: that means the excess portion of film extending past the edge of the capsule is not always perfectly circular but may have partial tears or an irregular surface giving rise to evident problems, both aesthetic and functional. Moreover, the risk of damaging the capsule during the cutting step remains.

Document US 2004/0094229 A1 discloses a method and a machine for dispensing a fluent material to articles which receive the fluent material.

### Disclosure of the Invention

This invention therefore has for an aim to overcome the above mentioned disadvantages by providing a method and a machine for packing infusion products into capsules. The method and the machine make it possible to obtain an end product of high quality without affecting the productivity per unit time of the machine.

According to the invention, the above aim is achieved by a method and a machine for packing infusion products into capsules according to claims 1 and 11, respectively.

### Brief Description of the Drawings

The technical features of the invention, according to the above aims, are more apparent from the detailed description which follows, with reference to the accompanying drawings which illustrate a non-limiting example embodiment of the invention and in which:
Figure 1 is a schematic side view of a machine for packing infusion products into capsules according to the invention;
Figure 2 is a perspective view of a capsule with overwrapping made by the machine of Figure 1;
Figure 3 is a perspective view of a sealed capsule made by the machine of Figure 1;
Figure 4 is a scaled-up side view, with some parts in cross section, of a detail of the sealed capsule of Figure 3;
Figures 5, 6 and 7 are schematic side views from the side opposite that of Figure 1, with some parts cut away and others in cross section, of a part of a station for feeding empty capsules forming part of the machine of Figure 1 in three different operating configurations;
Figure 8 is a schematic perspective view of the machine of Figure 1, with some parts cut away for clarity;
Figure 9 shows a sealing film in a perspective view which is scaled up compared to Figure 8;
Figure 10 is a schematic side view of a capsule coupling and sealing station forming part of the machine of Figure 1;
Figure 11 is a schematic top plan view of the coupling and sealing station of Figure 10, with some parts cut away in order to better illustrate others;
Figure 12 is a schematic side view of a sealing device forming part of the capsule coupling and sealing station of Figures 10 and 11.

### Detailed Description of the Preferred Embodiments of the Invention

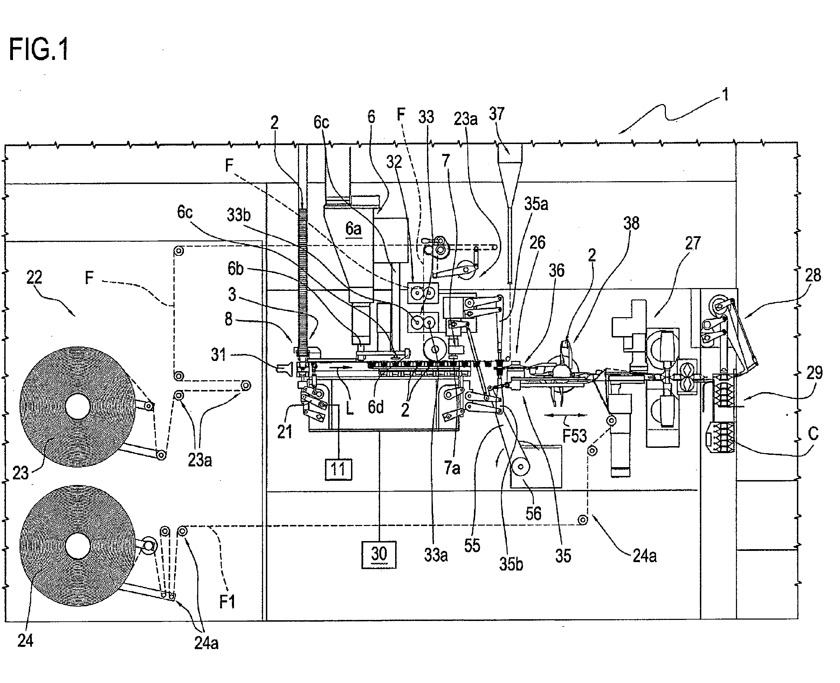

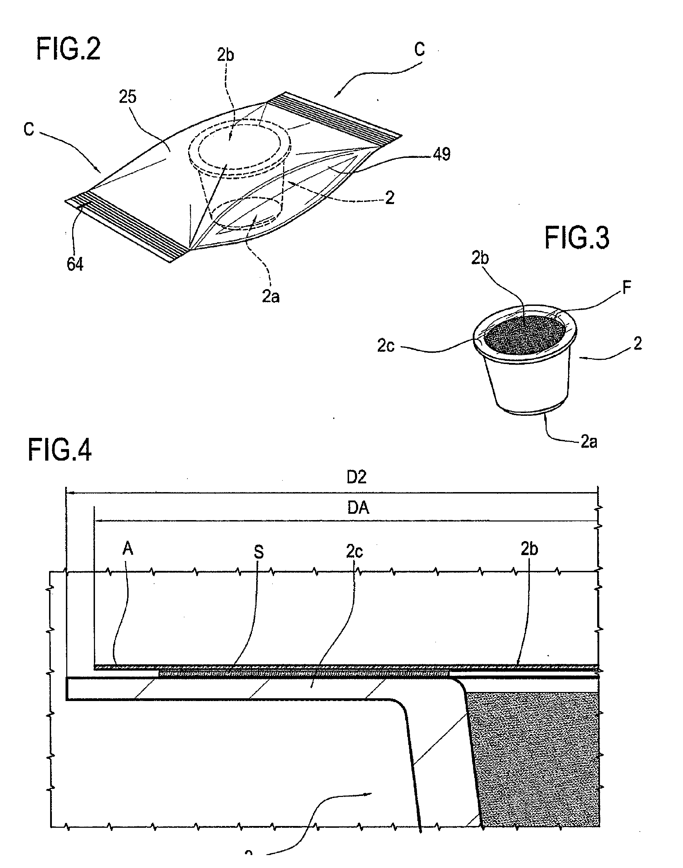

Figure 1 illustrates a machine 1 designed to pack infusion products, such as coffee, into capsules 2 and to individually wrap the latter in an overwrap 25, or "flow pack" of flexible paper, plastic or other material. The capsule 2 (shown in Figures 2, 3 and 4) is, by way of a non-limiting example only, frusto-conical in shape, with a first end, namely a circular minor base 2a, which is closed, and a second end, namely a major base 2b which is open (and which will be sealed by a sealing portion A of a first sealing film F, as described in more detail below) and is provided with a protruding annular rim or collar 2c forming a sealing contact base for the sealing portion A of sealing film F.

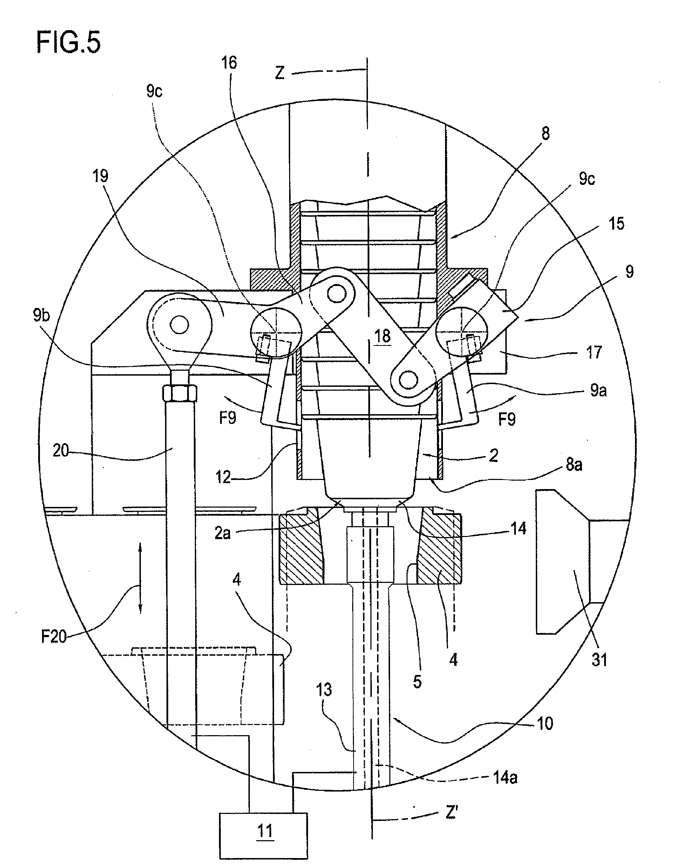

The machine 1 comprises a series of stations for manipulating, filling, sealing and overwrapping the capsules 2 and all enclosed within a zone in a controlled atmosphere (using nitrogen, for example) so as to preserve the chemical and physical qualities of the product, for example, aroma in the case of coffee. More in detail, these stations, arranged along a line L of product feed, are the following:
- a first station 22 comprising a first roll 23 for continuously feeding first (heat)sealable sealing film F for sealing the major base 2b of each capsule 2 and a second roll 24 for feeding a second overwrapping film F1 used to make the overwrap 25;
- a second station 3 for feeding capsules 2 to be placed on conveyor members, and more specifically, carrier blocks 4 (shown in detail in Figures 5-7), featuring seats 5 for receiving the capsules 2 positioned with the major base 2b facing upward and moved stepwise along the feed line L;
- a third station 6 for filling the advancing capsules 2 with charges of the infusion product through the major base 2b;
- a fourth station 7 for sealing the major base 2b of each capsule 2 with a respective sealing portion of sealing film F;
- a fifth station 26 for picking and placing the capsules 2 in
- a sixth coupling and sealing station 27 for coupling the overwrapping film F1 and the respective capsules 2 and for sealing individual lengths of overwrapping film F1 around a respective capsule 2;
- a seventh station 28 for picking up the packs C made and feeding the packs into
- an eighth station 29 of known type for stacking, followed by packaging into boxes containing a plurality of the packs C.

The movement of the capsules 2 and of the elements forming part of the above mentioned stations are controlled and synchronized by a main control unit 30 of the machine 1 (illustrated as a block in Figure 1).

Looking more closely at the technical details, the first and the second roll 23 and 24 are located upstream of the feed line L and are provided with respective feed units 23a and 24a to allow the respective webs of film F and F1 to follow a predetermined path and reach the relevant zones or stations: the first sealing film F up to the vicinity of the fourth station 7 for sealing the major base 2b of the capsule 2 after passing through substations where the film F is processed (as described in more detail further on in this specification); the second overwrapping film F1, on the other hand, up to the vicinity of the above mentioned sixth coupling and sealing station 27 (also described in more detail further on in this specification).

The second station 3 for feeding empty capsules 2 to be placed inside the seats 5 in the carrier blocks 4 (shown in detail in Figures 5-7) comprises a magazine for the empty capsules 2, means 9 for releasing and retaining the capsules 2 from the magazine and means 10 for holding and stabilizing the movement of the released capsule 2.

The magazine comprises at least one containment element 8 for containing the capsules 2 stacked one inside the other, and has an open bottom 8a located above the carrier blocks 4.

The containment element 8, for example in the form of a hollow cylinder, extends at least partly along a vertical axis Z coinciding, at least during a step of feeding the capsule 2, with a downfeed axis Z' which is central with respect to the seats 5 in each carrier block 4.

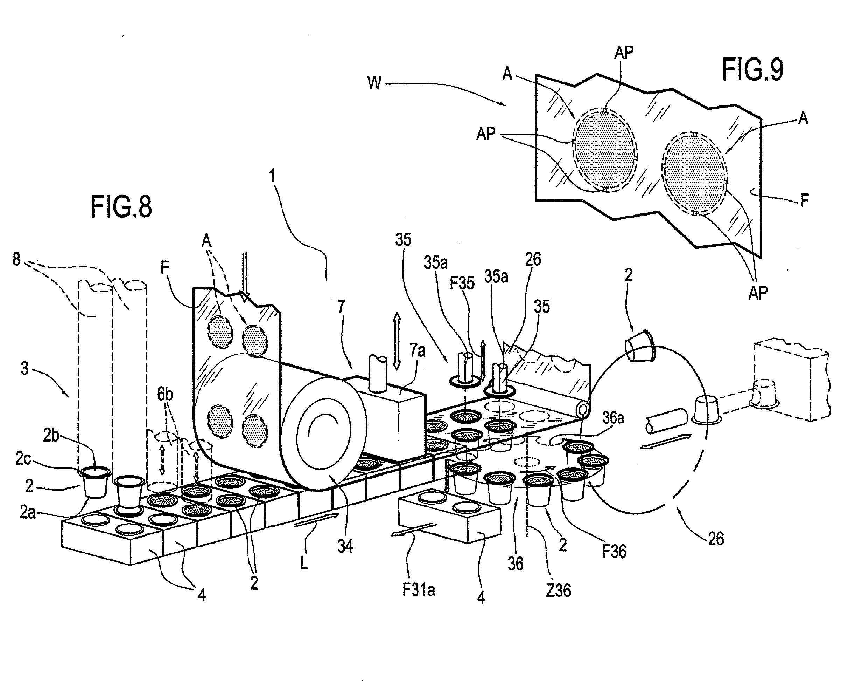

Purely by way of an example, the machine 1 comprises a pair of hollow cylindrical containment elements 8 extending side by side (see also Figure 8), with a vertical axis Z, and mounted at a certain height above the zone where the carrier blocks 4 pass, the latter being each in turn provided with a pair of seats 5 placed side by side. Each cylinder 8 houses the empty capsules 2 to be fed to the carrier blocks 4.

The means 9 for releasing and retaining the capsules 2 are located at the containment element 8 and operate on the capsules 2 in such a way as to allow one capsule 2 to be released individually in synchronized manner towards the carrier block 4 along the downfeed axis Z' and to retain the next capsule 2.

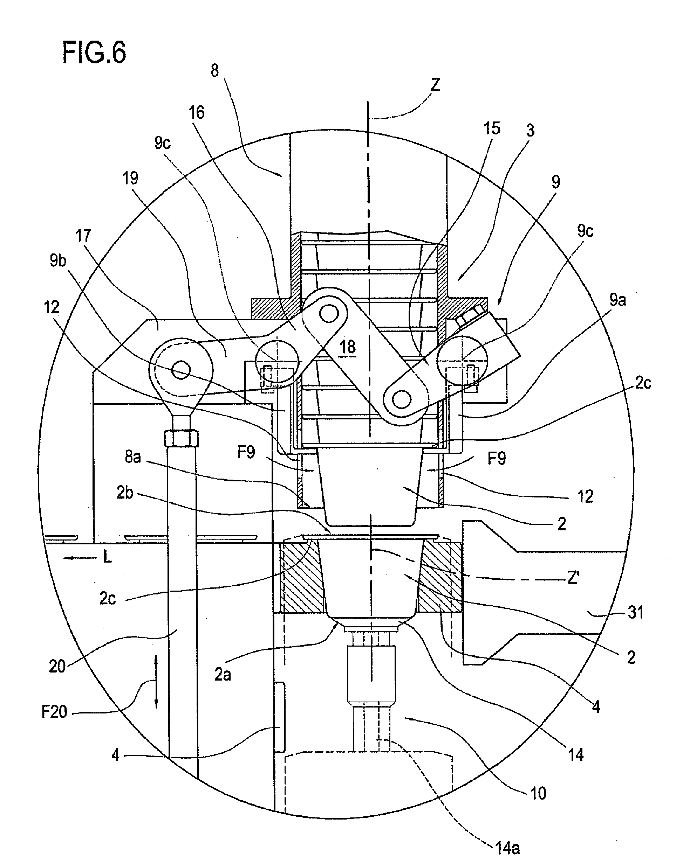

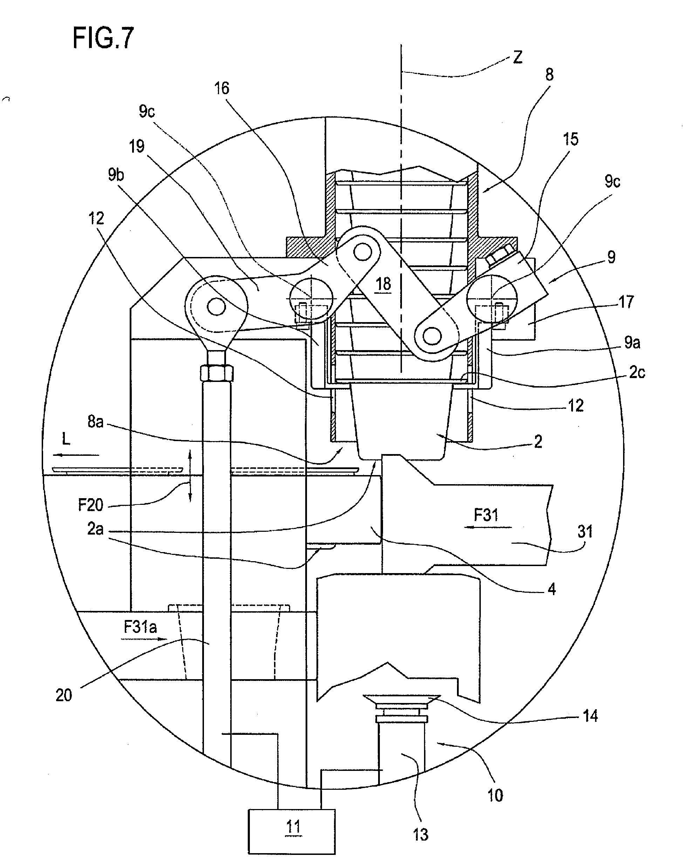

More specifically (again see Figures 5 to 7), the releasing and retaining means 9 comprise at least one pair of L-shaped levers 9a and 9b opposite each other and located on opposite sides of each containment element 8. Each pair of levers 9a and 9b acts in a substantially radial direction relative to the containment element 8. Each pair of levers 9a and 9b is driven by drive means 11 designed to allow the pair of levers 9a, 9b to move from a first position, away from the containment element 8, in order to release the capsule 2 (see Figure 5) to a second close-up position, near the containment element 8, in order to retain the next capsule 2 (see Figures 6 and 7).

To allow the capsules 2 to be retained, a horizontal stretch of each lever 9a and 9b, in the close-up position, is inserted into a respective through slot 12 in each containment element 8 and is positioned under a respective stretch of the annular collar 2c of the capsule 2 positioned in the vicinity of the open bottom of the containment element 8.

The levers 9a, 9b are linked, at 9c, to respective arms 15, 16 linked to a mounting structure 17.

The two arms 15, 16 are in turn connected to each other by a third, middle arm 18 forming a drive rod, opposed to and synchronized with the levers 9a, 9b for moving them towards and away from each other (see arrows F9).

An extension 19 of the arm 16 is pivoted at one end to a transmission lever 20 movable vertically in both directions (see arrow F20) and forming part of a connecting rod and crank assembly connected to the main drive means 11 of the machine 1 equipped with customary cam means for driving the transmission lever 20 (illustrated as a block since they are of known type).

As already stated, the numeral 10 denotes the means for holding and stabilizing the downfeed movement of the released capsule 2. The holding and stabilizing means 10 are located under the containment elements 8, move in synchrony with the releasing and retaining means 9 and operate on the minor base 2a of the capsule 2 and along the vertical downfeed axis Z'. More specifically, the means 10 for holding and stabilizing the downfeed movement of the capsule 2 comprise a movable rod 13 and are positioned and movable in both directions along the downfeed axis Z' and pass through the seat 5 in the carrier block 4 in the feed position under the containment element 8.

The rod 13 is equipped at a free upper end of it with a contact suction cup 14 for contacting, when in a raised position, the minor base 2a of the capsule 2: that way, it is possible to obtain secure contact between the suction cup 14 and the minor base 2a (Figure 5), and to move the capsule 2 away from the containment element 8 and towards the respective seat 5 (Figure 6). The rod 13 is also linked at the bottom to a guide arm 21 which is reciprocatingly movable in both directions and which is axially keyed to the main drive means 11 (see Figure 1).

Each suction cup 14 may be provided with a conduit 14a for generating a negative pressure allowing an improved hold on the minor base 2a of the capsule 2. As already mentioned, therefore, the holding and stabilizing means 10 and the releasing and retaining means 9 are both driven by the main drive means 11 so as to cyclically synchronize their movements.

Thanks to this combination of elements, it is possible to obtain continuous and precise feed of the capsules 2 into the seats 5, since the levers 9a, 9b allow a single capsule 2 to be released in synchrony towards the respective seat 5 of the carrier block 4, positioned coaxially along the downfeed axis Z' and under the containment element 8. During the movement apart of the two levers 9a, 9b to release the last capsule 2, the rod 13 is positioned under the capsule 2 itself in order to allow the capsule 2 to move down correctly into the respective seat 5 in the carrier block 4 which is in the feed position at that moment.

The carrier blocks 4 are positioned in succession on two levels and follow an endless path: the first level, that is, the operating one, comprises a succession along the feed line L (as shown also in Figure 8) and the blocks are made to advance stepwise thanks to a pushing element 31 located at the upstream end of the feed station 3 (see arrow F31 in Figure 7); the second level, that is, the non-operating return one, extends under the first level and parallel with the latter and moves in the opposite direction (see arrow F31a in Figure 7).

In other terms, therefore, once the capsules 2 have been placed in the seats 5, the pushing element 31 pushes the carrier block 4 in such a way as to make it advance towards the next stations of the machine 1. The retraction of the pushing element 31 allows the next carrier block 4, located at the second level, to be lifted by suitable lift means (not illustrated). Similarly, at the opposite end, as described below, the carrier block 4 that has been freed of the full, sealed capsules moves down to the second level. The stepwise feeding motion of the carrier blocks 4 takes the carrier blocks 4 in succession:
- into the third station 6 for filling the capsules 2 with charges of the product, comprising a hopper 6a and fillers 6b;
- to a unit 6c for pressing the product charges into the capsules 2; and
- to a device 6d for detecting the presence of the product in the capsules 2 (for example, a capacitive or optical detector).

At this point, the capsules 2, which have been filled and are still inside the carrier blocks 4, are carried to the zone for positioning the sealing film F which is fed vertically from above by the feed elements 23a and, as it moves downwards, meets two film preparing units:
- a first, micro-perforating unit 32; and
- a second unit 33 for pre-cutting a sealing portion A.

In practice, the first, micro-perforating unit 32 comprises a perforating assembly (mechanical or laser type) which creates a circular zone of microperforations designed, in use, to percolate the water and product mix. The micro-perforating unit 32 may be omitted, depending on the type of capsule 2 to be made.

The second, pre-cutting unit 33 may comprise a knife 33a and a counter-knife 33b shaped in such a way as to form a pre-cut sealing portion A, which is circular in the example illustrated, with at least one, but preferably at least three radial joining protrusions AP, spaced at equal angular intervals, for joining the sealing portions A to the rest of the sealing film F (in Figure 9, there are four of these protrusions by way of an example). As shown in Figure 4, the sealing portion A created has a diameter DA that is smaller than the diameter D2 of the collar 2c of the capsule 2: this feature will make it possible, once the sealing portion A is attached to the capsule 2, to avoid the problem of excess edges and trimming of the sealing portion A along the collar 2c of the capsule 2. Returning to the machine 1, the sealing film F with the pre-cut sealing portions A on it is brought into contact with the major base 2b by a feed roller 34.

In the next step, the capsule 2 with sealing film F superposed over it comes under the above mentioned fourth sealing station 7, which is equipped with a suitable sealer 7a adapted to join, for example by heat sealing or ultrasound sealing, the sealing portion A to the collar 2c at a joining zone, labelled S in Figure 4, for example annular in shape.

Next, the carrier blocks 4 are moved away from the sealed capsules 2, that is to say, the carrier blocks 4 are made to move down to the second level, while the continuous web of sealing film F, with the capsules 2 joined by the seal S, is made to advance further stepwise (thanks also to bilateral translational grippers operating on the sealing film F but not illustrated in detail here since they are of known type) until it reaches the fifth station 26 for picking the capsules 2 and placing them in the sixth station 27 for coupling and sealing with the overwrapping film F1. It should be noted that the capsules 2 are moved without being manipulated directly but by moving the sealing film F to which they are attached by the radial protrusions AP.

The fifth, pick and place station 26 comprises an ejector device 35, a carousel 36 and a single pick unit 38 for picking up the capsule 2.

The ejector device 35 is composed of a pair of pressers 35a and counter-pressers 35b movable in synchronized fashion and vertically (see arrows F35, Figure 8), and adapted to detach the capsule 2 with the sealing portion A from the remaining waste portion of the sealing film F, in other words, to tear the radial joining protrusions AP.

The controlled release, thanks to the combined movement of the pressers 35a and counter-pressers 35b, causes the capsules 2 to drop, in pairs, into circular seats 36a in the carousel 36.

The waste portion of the sealing film F is then extracted by a suction extraction unit 37 soon after being detached from the capsules 2 (see Figure 1).

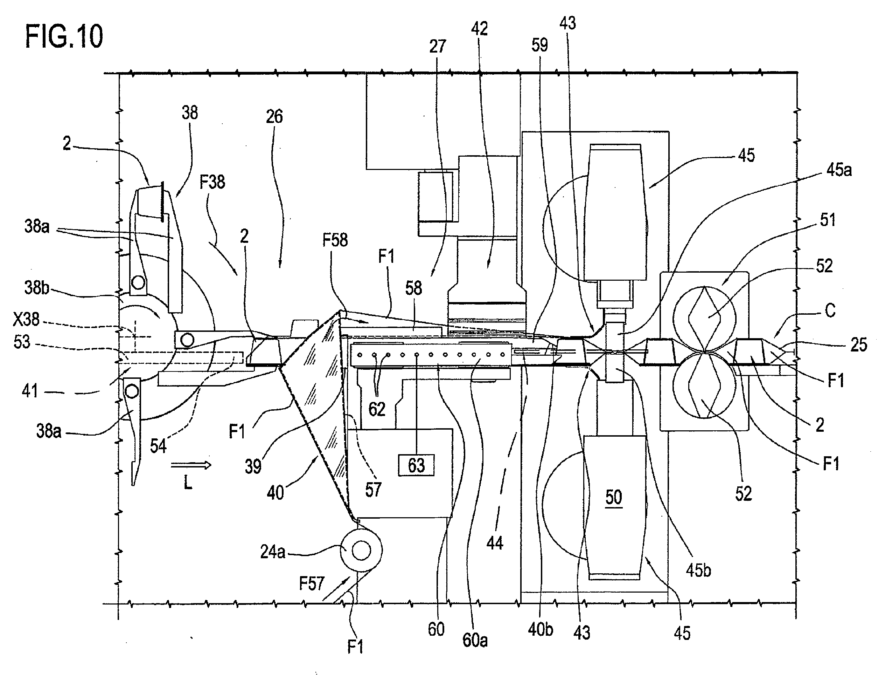

The carousel 36, located at a height below the first level at which the carrier blocks 4 move, causes the capsules 2 to rotate, still stepwise, through approximately 180° about a vertical axis Z36 (see arrow F36 in Figure 8) in such a way as to position them at a zone operated on by the single pick unit 38 for picking up the capsule 2 (see Figure 10).

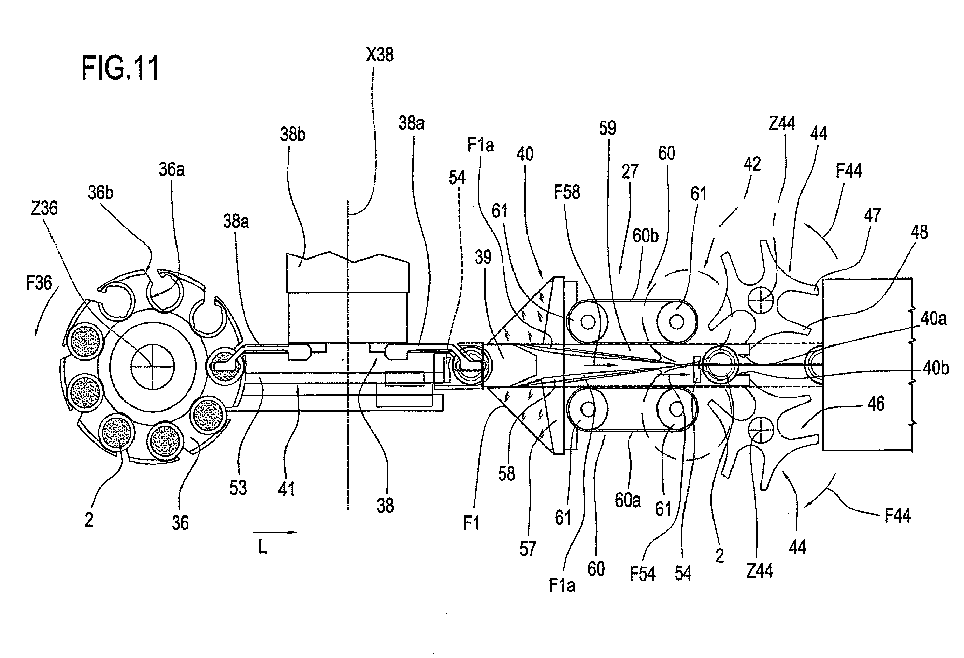

With reference to Figures 10 and 11, the single pick unit 38 picks up and rotates the capsule 2 through 180° about a horizontal axis X38 and rests the capsule 2 on its major base 2b, more stable than if rested on the minor base 2a, on a sliding feed table 39 of the coupling and sealing station 27 (following a circular path F38). More specifically, the single pick unit 38 is located immediately upstream of the sixth, coupling and sealing station 27.

The single pick unit 38 is equipped with a plurality of grippers 38a protruding radially from a revolving drum 38b.

The ends of each gripper 38a are shaped in such a way as not to interfere' with other parts of the machine 1 during the picking and rotational lift movement of the capsules 2 from the carousel 36.

The coupling and sealing station 27 comprises (see Figures 10 to 12):
- a frame 40 for continuously forming the second, overwrapping film F1 into the shape of a tube and having a sliding feed table 39 on which the capsule 2 can be positioned on one of its ends (in the embodiment illustrated, the second end 2b);
- a pusher device 41 for pushing the single capsules 2 along the sliding feed table 39 and designed to position each capsule 2 in the vicinity of a picking point close to an outermost or outfeed end of the frame 40 and then, relative to the feed line L, at a first longitudinal sealer 42 which operates on the second, overwrapping film F1 to make a continuous closed tube of overwrapping film;
- means 43 for guiding and retaining the capsule 2 feeding out of the frame 40, operating on the capsule 2 from the outside of the continuous closed tube of overwrapping film, movable in synchronized fashion with a second, transversal sealer 45 designed to make a transversal seal on the tube of overwrapping film in order to seal the ends of each single pack C and in such a way as to allow coordinated feeding of the capsule 2 and of the tube of overwrapping film along the feed line L so as to keep the capsule 2 and the tube of overwrapping film in a stable position relative to each other while the transversal seal is being made. The transversal seal is therefore made, relative to the feed line L, downstream of the capsule 2 which is guided and retained by the guiding and retaining means 43.

More in detail, the frame 40 comprises (see in particular Figures 1 and from 10 to 12) a pair of front walls 57 or ties and a tubular structure 59 forming a core for the overwrapping film F1.

The overwrapping film F1 is fed from the second roll 24 from under the zone where the two ties 57 are located and slides over the two ties 57 (see arrow F57, Figure 10).

The overwrapping film F1 slides until it reaches an infeed and folding zone along the feed line L where, thanks to a folding element 58 extending in parallel with the feed line L, it is wrapped on itself to form the tube of overwrapping film (see arrow F58, Figures 10 and 11).

The tubular structure 59, which is quadrangular in section, is provided with the feed table 39 (forming the bottom side of the structure), and with movement means 60 for moving the overwrapping film F1 and operating on both sides of the tubular structure 59.

In addition to the above, the tubular structure 59 has at least one longitudinal upper slit in the shape of a V lying on one side, which forms the folding element 58 and within which two free edges F1a of the overwrapping film F1 are slidable up to the vicinity of the first, longitudinal sealer 42 which seals them together. The longitudinal sealer 42 comprises a pair of heated rollers in tangential contact and counter-rotating in order to allow the overwrapping film F1 to form the overwrapping film tube.

The movement means 60 may comprise rubber-coated tracks 60a, 60b located on opposite sides of the tubular structure 59. Each of the tracks 60a, 60b is closed in a loop around a pair of motor-driven pulleys 61 and features a plurality of holes 62 on the surface of it operated on by a unit 63 for generating a negative pressure (illustrated as a block in Figure 10) so as to allow the overwrapping film F1 interposed between the tubular structure 59 and the tracks 60a, 60b to adhere securely and be fed forward.

The pusher device 41 comprises a horizontal rod 53 having a pushing head 54 shaped to push the capsule 2 resting on the table 39. The rod 53 with the head 54 allows the capsule 2 to slide along the sliding feed table 39 from a front end to a rear end of the sliding feed table 39 itself into a pickup point (see arrow F54, Figure 11). The rod 53 is driven by a link mechanism 55 (see Figure 1 in particular) constrained to cam means 56 connected to the main drive means 11 in such a way as to allow the rod 53 to move reciprocatingly in parallel with the table 39 (see arrows F53, Figure 1). As shown in Figure 11, the grippers 38a of the single pick unit 38 are suitably shaped to by-pass the head 54 of the pusher 53. Consequently, the seat 36a of the carousel 36 has a radial slit 36b shaped to match it and open on the outside of each seat 36a.

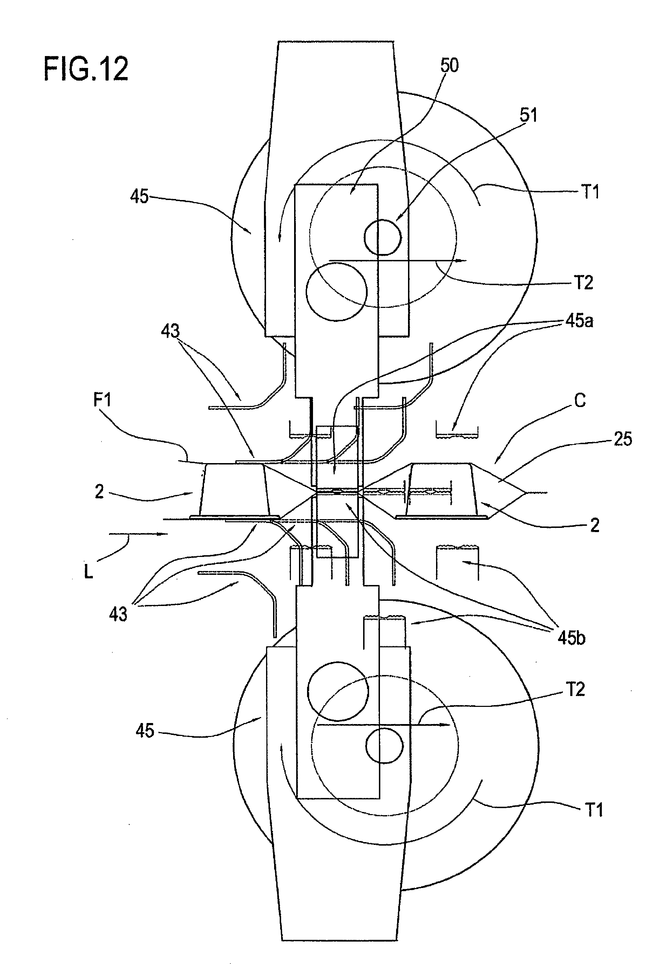

The guiding and retaining means 43 comprise a pair of tabs 43 for retaining and guiding the capsules 2 up and down. The tabs 43, see Figure 12 in particular, are flexible and are associated with a respective part of the second, transversal sealer 45, upstream of them with reference to the feed line L. The tabs 43 are therefore movable with the second, transversal sealer 45 for intercepting the capsule 2 inside the respective tube of overwrapping film at the rear end of the sliding feed table 39 when outside the range of the rod 53. This occurs when the second transversal sealer 45 moves towards the tube of overwrapping film. The tabs 43 thus cause the capsule 2 to advance along the feed line L together with the portion of overwrapping film tube wrapped around the capsule 2 and their movements are synchronized with the movement of the second transversal sealer 45.

The machine 1 may also comprise a pair of discs 44 which are located on opposite sides of the tube of overwrapping film being fed forward and which rotate about respective vertical axes Z44 (see arrows F44, Figure 11). Each disc 44 has a series of radial seats 46 formed by pairs of protruding arms 47 and 48 and designed to be positioned on the outside of the overwrapping film tube on both sides of the capsule 2 in the vicinity of the rear end of the sliding feed table 39. When the capsule 2 is fed forward (see Figure 2), the ends of each pair of arms 47 and 48 create internal side folds 49 on the overwrapping film tube.

With reference to Figures 10 and 11, it may be noted that a rear end of the frame 40 is provided with slots 40a, 40b on each of its sides to allow correct passage, at least partial, of the pairs of arms 47, 48 of the discs 44.

As clearly shown in Figure 12, the second, transversal sealer 45 comprises a pair of opposed sealing heads 45a, 45b. The sealing heads 45a and 45b are associated with respective supports 50 in turn driven by cam means 51 adapted to allow each of the sealing heads 45a and 45b to follow a path comprising at least a first non-operating stretch which is, advantageously, substantially circular (see arrow T1), and a second operating stretch which is, advantageously, rectilinear (see arrow T2) when contact is made with the overwrapping film tube in order to seal it transversally. In the operating stretch, the sealing heads 45a and 45b move at a speed equal to the feed speed of the overwrapping film tube. A path similar to that of the sealing heads 45a and 45b is followed by the tabs 43 associated with the sealing heads 45a and 45b.

Lastly, downstream of the transversal sealer 45, with reference to the feed line L, there is a cutting unit 51, formed by a pair of rotary knives 52, synchronized with the transversal sealer 45, for separating individual packs C of capsules 2 with overwrapping 25.

The knives 52 are suitably shaped to separate individual packs C and to make in each of them an easy tear notch 64 to facilitate opening.

The individual packs C are then fed into an eighth stacking station 29 from where they are carried in predetermined groups to a multiple packaging station (of known type and therefore not illustrated).

To sum up, therefore, a method according to the invention for packaging capsules 2 in an overwrap 25 comprises the following steps:
- feeding the empty capsules 2 in succession along the feed line L by means of the containment elements 8 on the carrier blocks 4 (see Figures 1 to 8);
- filling the capsules 2 with respective charges of infusion product through the second end 2b of the capsules 2 using the fillers 6b, and then pressing the charges into the capsules 2 using the pressing unit 6c (see Figures 1 and 8);
- pre-cutting the web of sealing film F (using the pre-cutting unit 33) for making a plurality of circular sealing portions A with a diameter DA smaller than the diameter D2 of the annular collar 2c of the capsule 2; the sealing portions A remain attached to the rest of the sealing film F by at least three radial protrusions AP (see Figures 1, 8 and 9);

- sealing each capsule 2 with the sealing portions A using the sealers 7a acting at least on the annular zone S of the collar 2c of the second end 2b of the capsule 2;
- separating each capsule 2 sealed by the respective sealing portion A from the remaining waste portion of the film F using the ejector device 35 (see Figures 1 and 8), and at the same time
- placing the capsules 2 in the carousel 36 in order to rotate them about the vertical axis Z36 up to the point of;
- picking and rotation of the capsule 2 about the horizontal axis X38 and placing it on the sliding feed table 39 (see Figures 8, 10 and 11);
- moving the capsule 2 in a straight line along the table 39 (using the pusher device 41) in order to place the capsule 2 in the vicinity of the picking point, that is to say, at the outfeed end of the frame 40 (see Figures 10, 11 and 12);
- picking and guiding the movement of the capsule 2 together with a length of the overwrapping film F1 being fed along the feed line L in the tubular configuration formed on the frame 40 and sealed along the first longitudinal seal made by the first, longitudinal sealer 42 (see Figures 10, 11 and 12); this guided movement continues at least until
- making a second transversal seal on the overwrapping film tube downstream of the capsule 2 with reference to the feed line L (see in particular Figure 12). After the second, transversal seal has been made, a third, transversal seal is made upstream of the capsule 2, with reference to the feed line L, in such a way as to form an individual pack C (see Figures 1 and 12). The third, transversal seal made on the overwrapping film tube of one capsule 2 simultaneously forms the second, transversal seal on the overwrapping film tube of the capsule 2 immediately following the capsule 2 being packed along the feed line L.

Once the third transversal seal has been made, the individual pack C is cut off from the rest of the overwrapping film tube (see Figures 1 and 10).

As may be observed in Figure 9, the pre-cutting step creates, in the embodiment illustrated and purely by way of an example, four protrusions AP joining the sealing portion A to the rest of the sealing film F and spaced at equal angular intervals from each other.

As already mentioned in the description of the machine 1, the separating step is accomplished by a vertical pushing action applied to the annular collar 2c of the sealed capsule 2 in such a way as to separate and, more specifically, tear the protrusions AP from the remaining waste portion of the sealing film F.

The step of rotating the capsule 2 turns the capsule 2 through an angle of approximately 180° in such a way as to rest it on the table 39 on its second end 2b, more stable than if the capsule 2 is rested on the second end 2a.

Lastly, it should be noted that the steps from the step of feeding the empty capsules 2 to the step of separating the sealed capsules 2 from the waste portion of the sealing film F, including rotation on the carousel 36, are accomplished by intermittent, synchronized stepwise motion of the machine, while the steps from the step of picking and rotating the capsule 2 to the step of cutting the individual pack C are performed with the machine operating with synchronized, continuous motion.

It should be noted that in the machine 1 just described, the carousel 36 receives two capsules 2 at a time from the ejector device 35, whereas the capsules 2 are picked up from the carousel 36 one at a time by the grippers 38a of the pick and place station 26. In other words, the carrier blocks 4 advance by one step for every two steps of the carousel 36, whereas the pick and place station 26 rotates by one step for every step of the carousel 36.

A machine and a method as described above makes it possible to achieve high productivity per unit time at a reduced cost and to obtain high quality finished capsules and packs.

The invention described above is susceptible of industrial application and may be modified and adapted in several ways without thereby departing from the scope of the inventive concept. Moreover, all the details of the invention may be substituted by technically equivalent elements. For example, instead of the single pick unit 38, a different system might be used to place the capsules 2 with the first closed end resting on the sliding feed table.

This invention, although described with reference to capsules having a substantially frusto-conical shape, might also be applied to capsules having a different shape. In such a case, the sealing film F is pre-cut into the exact shape and size for sealing the capsule without protruding from the edge of the capsule.

## Claims

1. A method for packing infusion products into capsules (2), each capsule (2) comprising a hard body forming a zone for containing a product charge and delimited by a first, closed hard end (2a) and a second open end (2b) with an outer rim (2c), the method comprising a succession of steps, including at least:
- feeding empty capsules (2) in succession along a feed line (L);
- filling each capsule (2) with a charge of infusion product through the second, open end (2b);
- sealing the capsule (2) with a sealing portion (A) of a web of sealing film (F) using joining means (7a) operating at least on a zone (S) of the second end (2b) of the capsule (2);
- separating the sealed capsules (2) from the waste portion of the sealing film (F), the method being **characterized in that** it comprises, between the filling step and the sealing step, a step of pre-cutting the web of sealing film (F) for making a plurality of sealing portions (A) smaller in size than the outer rims (2c) of the capsules (2); the sealing portions (A) being attached to the rest of the sealing film (F) by at least one radial protrusion (AP).

2. The method according to claim 1, wherein the separating step is accomplished by a pushing action applied to the outer rim (2c) in such a way as to tear/cut the radial protrusions (AP) from the remaining waste portion of the sealing film (F).

3. The method according to claim 1, wherein the sealing step is accomplished by sealing an outside part of each sealing portion (A) of sealing film (F) to a part of the outer rim (2c) of the capsule (2).

4. The method according to any of the foregoing claims, wherein the outer rim (2c) of the capsule (2) is circular in shape and the sealing portion (A) of sealing film (F) is circular in shape, the outer rim (2c) having a diameter (D2) that is larger than the diameter (DA) of the sealing portion (A).

5. The method according to any of the foregoing claims, wherein the pre-cutting step creates at least three radial protrusions (AP) spaced at equal angular intervals.

6. The method according to claim 1, wherein the separating step is followed by a further succession of steps, including:
- picking and rotating the capsule (2) about a position held during the preceding steps;
- moving the capsule (2) in a straight line along a sliding feed table (39) in order to allow the capsule (2) to be placed in the vicinity of a picking point;
- picking and guiding the movement of the capsule (2) together with a length of the continuous overwrapping film tube being fed along the feed line (L), the continuous overwrapping film tube comprising a first longitudinal seal and being folded around the capsule (2) at least until making
- a second transversal seal on the continuous overwrapping film tube downstream of the capsule (2) with reference to the feed line (L).

7. The method according to claim 6, wherein, after the second, transversal seal, a third, transversal seal is made upstream of the capsule (2), with reference to the feed line (L), in such a way as to form an individual pack (C); the third, transversal seal being at the same time the second, transversal seal for the overwrapping film tube around another capsule (2) immediately following the capsule (2) being packed; the step of making the third seal being followed by a step of cutting the individual pack (C) from the rest of overwrapping film tube.

8. The method according to claim 6, wherein the step of rotating the capsule (2) turns the capsule (2) through an angle of 180° in such a way as to rest it on the sliding feed table (39) on its second end (2b).

9. The method according to claim 1, wherein the steps from the step of feeding the empty capsules (2) to the step of separating the sealed capsules (2) from the waste portion of the sealing film (F) are accomplished by intermittent, synchronized motion.

10. The method according to claims from 6 to 8, wherein the steps from the step of picking and rotating the capsule (2) to the step of cutting the pack (C) are performed with synchronized, continuous motion.

11. A machine for packing infusion products into capsules (2), each capsule (2) comprising a hard body forming a zone for containing a product charge and delimited by a first, closed hard end (2a) and a second open end (2b) with an outer rim (2c), the machine comprising:
- a station (3) for feeding empty capsules (2) in succession along a feed line (L);
- a station (6) for filling the capsules (2) with charges of infusion product through the second, open end (2b);
- a station (7) for sealing the capsules (2) with sealing portions (A) of sealing film (F) using joining means (7a) operating at least on a zone (S) of the second end (2b) of each capsule (2);
- a pick and place station (26) designed to detach the capsules (2) from the remaining waste portion of the sealing (F), the machine being **characterized in that** it comprises, between the filling station (6) and the sealing station (7), a unit (33) for pre-cutting the web of sealing film (F) for making a plurality of sealing portions (A) of sealing film (F) smaller in size than the outer rims (2c) of the capsules (2); the sealing portions (A) being attached to the rest of the sealing film (F) by at least one radial protrusion (AP), preferably by three radial protrusions (AP).

## Patentansprüche

1. Verfahren zum Verpacken von Infusionsprodukten in Kapseln (2), wobei jede Kapsel (2) einen harten Körper umfasst, der einen Bereich zur Aufnahme einer Produktfüllung bildet und von einem ersten, geschlossenen harten Ende (2a) und einem zweiten, offenen Ende (2b) mit einer Außenkante (2c) begrenzt wird, wobei das Verfahren eine Aufeinanderfolge von Schritten umfasst, die mindestens Folgendes beinhalten:
- Zuführen leerer Kapseln (2) aufeinanderfolgend entlang einer Zuführlinie (L);
- Befüllen einer jeden Kapsel (2) mit einer Infusionsproduktfüllung durch das zweite, offene Ende (2b) ;
- Versiegeln der Kapsel (2) mit einem Versiegelungsabschnitt (A) einer Bahn Versiegelungsfolie (F) mithilfe von Zusammenfügemitteln (7a), die mindestens in einem Bereich (S) des zweiten Endes (2b) der Kapsel (2) tätig sind;
- Abtrennen der versiegelten Kapseln (2) vom Abfallabschnitt der Versiegelungsfolie (F), wobei das Verfahren **dadurch gekennzeichnet ist, dass** es zwischen dem Befüllungsschritt und dem Versiegelungsschritt einen Schritt des Vorstanzens der Bahn Versiegelungsfolie (F) zum Herstellen einer Vielzahl von Versiegelungsabschnitten (A) umfasst, die kleiner als die Außenkanten (2c) der Kapseln (2) sind; wobei die Versiegelungsabschnitte (A) am Rest der Versiegelungsfolie (F) durch mindestens einen radialen Überstand (AP) angebracht sind.

2. Verfahren nach Anspruch 1, wobei der Abtrennschritt durch eine Schubhandlung ausgeführt wird, die so auf die Außenkante (2c) ausgeübt wird, dass die radialen Überstände (AP) vom übrigen Abfallabschnitt der Versiegelungsfolie (F) abgerissen/geschnitten werden.

3. Verfahren nach Anspruch 1, wobei der Versiegelungsschritt durch Versiegeln eines Außenteils eines jeden Versiegelungsabschnitts (A) der Versiegelungsfolie (F) mit einem Teil der Außenkante (2c) der Kapsel (2) ausgeführt wird.

4. Verfahren nach einem der vorangehenden Ansprüche, wobei die Außenkante (2c) der Kapsel (2) kreisförmig ist und der Versiegelungsabschnitt (A) der Versiegelungsfolie (F) kreisförmig ist, wobei die Außenkante (2c) einen Durchmesser (D2) aufweist, der größer als der Durchmesser (DA) des Versiegelungsabschnitts (A) ist.

5. Verfahren nach einem der vorangehenden Ansprüche, wobei beim Vorstanzschritt mindestens drei radiale Überstände (AP) entstehen, die bei gleichmäßigen Winkelintervallen beabstandet sind.

6. Verfahren nach Anspruch 1, wobei auf den Abtrennschritt eine weitere Aufeinanderfolge von Schritten folgt, beinhaltend:
- Aufnehmen und Rotieren der Kapsel (2) um eine Position, die während der vorangehenden Schritte gehalten wird;
- Bewegen der Kapsel (2) in einer geraden Linie entlang eines Schiebezuführtisches (39), um ein Platzieren der Kapsel (2) in der Nähe eines Aufnahmepunktes zu gestatten;
- Aufnehmen und Führen der Bewegung der Kapsel (2) gemeinsam mit einem Stück des kontinuierlichen Umhüllungsfolienschlauchs, der entlang der Zuführlinie (L) zugeführt wird, wobei der kontinuierliche Umhüllungsfolienschlauch eine erste längliche Versiegelung umfasst und um die Kapsel (2) herum gefaltet wird, bis Folgendes hergestellt wird:
- eine zweite Querversiegelung auf dem kontinuierlichen Umhüllungsfolienschlauch, die der Kapsel (2) in Bezug auf die Zuführlinie (L) nachgelagert ist.

7. Verfahren nach Anspruch 6, wobei nach der zweiten Querversiegelung der Kapsel (2) in Bezug auf die Zuführlinie (L) vorgelagert eine dritte Querversiegelung so hergestellt wird, dass eine Einzelverpackung (C) gebildet wird; wobei die dritte Querversiegelung gleichzeitig die zweite Querversiegelung für den Umhüllungsfolienschlauch um eine andere Kapsel (2) ist, die unmittelbar auf die zu verpackende Kapsel (2) folgt; wobei auf den Schritt des Herstellens der dritten Versiegelung ein Schritt des Abschneidens der Einzelverpackung (C) vom Rest des Umhüllungsfolienschlauchs folgt.

8. Verfahren nach Anspruch 6, wobei beim Schritt des Rotierens der Kapsel (2) die Kapsel (2) so um einen Winkel von 180° gedreht wird, dass sie auf dem Schiebezuführtisch (39) auf ihrem zweiten Ende (2b) liegt.

9. Verfahren nach Anspruch 1, wobei die Schritte vom Schritt des Zuführens der leeren Kapseln (2) bis zum Schritt des Abtrennens der versiegelten Kapseln (2) vom Abfallabschnitt des Versiegelungsfilms (F) durch intermittierende, synchronisierte Bewegung ausgeführt werden.

10. Verfahren nach den Ansprüchen 6 bis 8, wobei die Schritte vom Aufnehmen und Rotieren der Kapsel (2) bis zum Schritt des Abschneidens der Verpackung (C) mit synchronisierter, kontinuierlicher Bewegung durchgeführt werden.

11. Maschine zum Verpacken von Infusionsprodukten in Kapseln (2), wobei jede Kapsel (2) einen harten Körper umfasst, der einen Bereich zur Aufnahme einer Produktfüllung bildet und von einem ersten, geschlossenen harten Ende (2a) und einem zweiten, offenen Ende (2b) mit einer Außenkante (2c) begrenzt wird, wobei die Maschine Folgendes umfasst:
- eine Station (3) zum Zuführen leerer Kapseln (2) aufeinanderfolgend entlang einer Zuführlinie (L);
- eine Station (6) zum Befüllen der Kapseln (2) mit Infusionsproduktfüllungen durch das zweite, offene Ende (2b) ;
- eine Station (7) zum Versiegeln der Kapseln (2) mit Versiegelungsabschnitten (A) einer Versiegelungsfolie (F) mithilfe von Zusammenfügemitteln (7a), die mindestens in einem Bereich (S) des zweiten Endes (2b) einer jeden Kapsel (2) tätig sind;
- eine Aufnahme- und Platzierstation (26), die dazu konzipiert ist, die Kapseln (2) vom übrigen Abfallabschnitt der Versiegelung (F) zu lösen, wobei die Maschine **dadurch gekennzeichnet ist, dass** sie zwischen der Befüllungsstation (6) und der Versiegelungsstation (7) eine Einheit (33) zum Vorstanzen der Bahn Versiegelungsfolie (F) zum Herstellen einer Vielzahl von Versiegelungsabschnitten (A) der Versiegelungsfolie (F) umfasst, die kleiner als die Außenkanten (2c) der Kapseln (2) sind; wobei die Versiegelungsabschnitte (A) am Rest der Versiegelungsfolie (F) durch mindestens einen radialen Überstand (AP), vorzugsweise durch drei radiale Überstände (AP), angebracht sind.

## Revendications

1. Procédé de conditionnement de produits à infuser dans des capsules (2), chaque capsule (2) comprenant un corps rigide formant une zone destinée à contenir une dose de produit et délimitée par une première extrémité rigide fermée (2a) et une seconde extrémité ouverte (2b) avec un bord extérieur (2c), le procédé comprenant une succession d'étapes, incluant au moins :
- alimenter des capsules vides (2) successivement le long d'une ligne d'alimentation (L) ;
- remplir chaque capsule (2) d'une dose de produit à infuser par le biais de la seconde extrémité ouverte (2b) ;
- sceller la capsule (2) avec une partie de scellement (A) d'un ruban d'un film d'hermétisation (F) utilisant des moyens de raccordement (7a) agissant au moins sur une zone (S) de la seconde extrémité (2b) de la capsule (2) ;
- séparer les capsules scellées (2) de la partie rebutée du film d'hermétisation (F), le procédé étant **caractérisé en ce qu'**il comprend, entre l'étape de remplissage et l'étape de scellement, une étape de prédécoupe du ruban de film d'hermétisation (F) pour réaliser une pluralité de parties de scellement (A) de plus petites dimensions que les bords extérieurs (2c) des capsules (2) ; les parties de scellement (A) étant fixées au film d'hermétisation (F) restant par au moins une saillie radiale (AP).

2. Procédé selon la revendication 1, dans lequel l'étape de séparation est accomplie par une action de poussée appliquée au bord extérieur (2c) de manière à déchirer/couper les saillies radiales (AP) de la partie rebutée du film d'hermétisation (F).

3. Procédé selon la revendication 1, dans lequel l'étape de scellement est accomplie en scellant une partie extérieure de chaque partie de scellement (A) de film d'hermétisation (F) à une partie du bord extérieur (2c) de la capsule (2).

4. Procédé selon l'une quelconque des revendications précédentes, dans lequel le bord extérieur (2c) de la capsule (2) possède une forme circulaire et la partie de scellement (A) du film d'hermétisation (F) possède une forme circulaire, le bord extérieur (2c) ayant un diamètre (D2) étant supérieur au diamètre (DA) de la partie de scellement (A).

5. Procédé selon l'une quelconque des revendications précédentes, dans lequel l'étape de prédécoupe crée au moins trois saillies radiales (AP) espacées à des intervalles angulaires égaux.

6. Procédé selon la revendication 1, dans lequel l'étape de séparation est suivie d'une autre succession d'étapes, incluant :
- la prise et la rotation de la capsule (2) autour d'une position maintenue lors des précédentes étapes ;
- le déplacement de la capsule (2) dans une ligne rectiligne le long d'une table d'alimentation coulissante (39) afin de permettre à la capsule (2) d'être déplacée à proximité d'un point de ramassage ;
- la prise et le guidage du déplacement de la capsule (2) avec une longueur du tube de film de surenveloppage continu étant alimenté le long de la ligne d'alimentation (L), le tube de film de surenveloppage continu comprenant un premier scellement longitudinal et étant plié autour de la capsule (2) au moins jusqu'à réaliser
- un second scellement transversal sur le tube de film de surenveloppage continu en aval de la capsule (2) en référence à la ligne d'alimentation (L).

7. Procédé selon la revendication 6, dans lequel, après le second scellement transversal, un troisième scellement transversal est réalisé en amont de la capsule (2), en référence à la ligne d'alimentation (L), de manière à former une confection individuelle (C) ; le troisième scellement transversal étant en même temps le second scellement transversal pour le tube de film de surenveloppage autour d'une autre capsule (2) suivant immédiatement la capsule (2) étant conditionnée ; l'étape consistant à réaliser le troisième scellement étant suivie par une étape de découpe de la confection individuelle (C) à partir du tube de film de surenveloppage restant.

8. Procédé selon la revendication 6, dans lequel l'étape de rotation de la capsule (2) tourne la capsule (2) d'un angle de 180° de manière à la placer, sur la table d'alimentation coulissante (39), sur sa seconde extrémité (2b).

9. Procédé selon la revendication 1, dans lequel les étapes comprises entre l'étape consistant à alimenter les capsules vides (2) et l'étape de séparation des capsules scellées (2) de la partie rebutée du film d'hermétisation (F) sont accomplies par un mouvement intermittent synchronisé.

10. Procédé selon les revendications 6 à 8, dans lequel les étapes comprises entre l'étape de prise et de rotation de la capsule (2) et l'étape de découpe de la confection (C) sont réalisées avec un mouvement synchronisé continu.

11. Machine de conditionnement de produits à infuser dans des capsules (2), chaque capsule (2) comprenant un corps rigide formant une zone destinée à contenir une dose de produit et délimitée par une première extrémité rigide fermée (2a) et une seconde extrémité ouverte (2b) avec un bord extérieur (2c), la machine comprenant :
- un poste (3) pour alimenter des capsules vides (2) successivement le long d'une ligne d'alimentation (L) ;
- un poste (6) de remplissage de capsules (2) avec des doses de produit à infuser à travers la seconde extrémité ouverte (2b) ;
- un poste (7) pour sceller les capsules (2) avec des parties de scellement (A) de film d'hermétisation (F) utilisant des moyens de raccordement (7a) agissant au moins sur une zone (S) de la seconde extrémité (2b) de chaque capsule (2) ;
- un poste de préhension et de positionnement (26) conçu pour détacher les capsules (2) de la partie rebutée restante du scellement (F), la machine étant **caractérisée en ce qu'**elle comprend, entre le poste de remplissage (6) et le poste de scellement (7), une unité (33) destinée à prédécouper le ruban de film d'hermétisation (F) pour réaliser une pluralité de parties de scellement (A) de film d'hermétisation (F) de plus petites dimensions que les bords extérieurs (2c) des capsules (2) ; les parties de scellement (A) étant fixées au film d'hermétisation (F) restant par au moins une saillie radiale (AP), de préférence par trois saillies radiales (AP).
